# EUROPÄISCHE PATENTSCHRIFT

(11) **EP 2 294 380 B1**
(45) Veröffentlichungstag und Bekanntmachung des Hinweises auf die Patenterteilung: **10.07.2019**
(21) Anmeldenummer: 09771984.3
(22) Anmeldetag: 12.05.2009
(51) Int. Cl.: G01M 11/06, B60Q 1/08

(54) **VERFAHREN ZUR DEJUSTAGEERKENNUNG EINES FAHRZEUGSCHEINWERFERS MIT EINER KAMERA**
METHOD FOR DETECTING MISALIGNMENT OF A VEHICLE HEADLIGHT USING A CAMERA
PROCÉDÉ DE DÉTECTION DU DÉSAJUSTEMENT D'UN PROJECTEUR DE VÉHICULE À L'AIDE D'UN APPAREIL DE PRISE DE VUE

(30) Priorität: 03.07.2008 DE 102008031159
(43) Veröffentlichungstag der Anmeldung: 16.03.2011
(73) Patentinhaber: ADC Automotive Distance Control Systems GmbH, 88131 Lindau (DE)
(72) Erfinder: MEHR, Wilfried, A-6960 Wolfurt (AT); FECHNER, Thomas, 88142 Wasserburg (DE); HEINRICH, Stefan, 77855 Achern (DE)
(74) Vertreter: Büchner, Jörg
(86) Internationale Anmeldenummer: PCT/DE2009/000674
(87) Internationale Veröffentlichungsnummer: WO 2010/000214

(56) Entgegenhaltungen:
- EP-A- 0 867 336
- EP-A- 0 949 118
- EP-A- 1 093 966
- EP-A1- 1 201 498
- EP-A1- 1 515 293
- EP-A2- 2 050 618
- WO-A-03/053737
- DE-A1- 3 039 325
- DE-A1- 4 122 531
- DE-A1- 19 704 427
- DE-A1- 19 914 417
- DE-A1- 19 916 175
- DE-A1-102004 052 434
- DE-T2- 60 309 278
- US-A- 4 647 195
- US-A1- 2004 052 083

## Beschreibung

Die Erfindung betrifft ein Verfahren zur Justage eines Fahrzeugscheinwerfers und verhindert, die unbeabsichtigte Blendungen anderer Verkehrsteilnehmer.
Die hier vorgestellte Erfindung findet Anwendung in einem beliebigen Fahrzeug mit einem Kamerasystem, dass die Umgebung vor dem Fahrzeug erfasst und einer Steuereinheit für Scheinwerfer.
Moderne adaptive Scheinwerfersysteme wie z.B. Fernlichtassistenten mit gleitender Leuchtweite passen sich durch Veränderung der Ausleucht-Charakteristik an die aktuelle Verkehrssituation an. In derartigen Systemen wird eine Kamera eingesetzt, um vorausfahrende und entgegenkommende Fahrzeuge zu erkennen und deren Position zu bestimmen. Die Scheinwerfer können dann mittels dieser Information so eingestellt werden, dass eine maximale Ausleuchtung stattfindet ohne die anderen Verkehrsteilnehmer zu blenden. Ein dejustierter Scheinwerfer kann jedoch zu einer unbeabsichtigten Blendung führen, da nicht der vorgegebene Bereich ausgeleuchtet wird. In der Regel wird eine Scheinwerferjustage in einer KFZ-Werkstatt mit einem Scheinwerfereinstellgerät vorgenommen. Nachteilig an dieser Methode ist, dass eine Scheinwerferjustage für den Fahrzeuginhaber mit Zeitaufwand und Kosten verbunden ist.

In der Europäischen Patentanmeldung EP 0 949 118 A2 wird bereits eine Einrichtung zur Überprüfung der korrekten Justage eines Scheinwerfers eines Fahrzeugs beschrieben. Mittels einer Sensoreinrichtung wird die Beleuchtungssituation vor dem Fahrzeug in Form des von der Fahrbahn reflektierten Lichts erfasst. Die erfasste Beleuchtungssituation wird mit einer vorgegebenen Soll-Beleuchtungssituation verglichen. Bei Abweichung erfolgt eine automatische Korrektur der Leuchtweite.

Eine weitere Einrichtung zur Regelung der Leuchtweite von Scheinwerfern von Kraftfahrzeugen ist beispielsweise aus der DE 41 22 531 bekannt. Mittels eines optoelektronischen Sensors wird die Ausleuchtung der Fahrbahn vor dem Kraftfahrzeug registriert. In einer Auswerteeinrichtung werden anschließend Signale über die Ist-Ausleuchtung mit gespeicherten Soll-Daten verglichen. In Abhängigkeit der festgestellten Abweichung werden außerdem Verstelleinrichtungen angesteuert.

Die EP 0 867 336 A1 zeigt eine Scheinwerferanordnung mit automatischer Regelung der Ausrichtung eines Fahrzeugscheinwerfers, wobei mittels eines Beleuchtungssensors eine vor dem Fahrzeug erzeugte Hell-Dunkel-Grenze beobachtet wird und in Abhängigkeit der Sensordaten eine Stelleinrichtung für den Scheinwerfer angesteuert wird.

Der US 2004/0052083 A1 ist eine Fahrzeugscheinwerfersteuerung mit einer Kamera zu entnehmen. Die Kamera wird dazu verwendet, um mittels einer Bildverarbeitung der Kamerabilder Umgebungsobjekte wie Fahrspurmarkierungen und vorausfahrende oder entgegenkommende Fahrzeuge zu erkennen, und unter Berücksichtigung der erkennten Umgebungsobjekte die Fahrzeugscheinwerfer so zu steuern, dass eine Blendung anderer Fahrzeugführer verhindert wird.

Die DE 197 04 427 A1 zeigt eine Einrichtung zur Regelung der Leuchtweite von Scheinwerfern von Fahrzeugen, bei der mittels zwei Sendeeinheiten jeweils ein Strahlungsbündel ausgesandt wird, das jeweils einen Spot bestrahlt. Die Spots werden als Bildpunkte in einer elektrooptischen Sensoreinrichtung abgebildet. Eine nicht korrekte Einstellung der Leuchtweite kann aus dem Abstand der Bildpunkte erkannt. Durch eine Ansteuerung von den Scheinwerfern zugeordneten Verstelleinrichtungen kann ein vorgegebener Abstand der Bildpunkte eingestellt werden, was zu einer korrekten Einstellung der Leuchtweite führt.

Die EP 1 201 498 A1 zeigt eine Vorrichtung zur automatischen Korrektur der "vor-Ort"-Orientierung eines Fahrzeugscheinwerfers, bei der eine Sendeeinrichtung und eine Empfangseinrichtung im Bereich der Scheinwerfer angeordnet sind. Die Sendeeinrichtung projiziert zwei Lichtflecken auf den Boden vor dem Fahrzeug, die in der Richtung parallel zur Fahrzeuglängsachse einen Abstand aufweisen. Die Empfangseinheit zur Messung der Beleuchtungsstärke der beiden Lichtflecken umfasst ein Objektiv zur Abbildung der beiden Lichtflecken auf einen CCD-Bildsensor, der für jeden Lichtfleck ein Ausgangssignal bereitstellt. Die Ausgangssignale werden ausgewertet und ein Aktor kann die Orientierung eines Reflektors der Scheinwerfer entsprechend korrigieren.

Die DE 30 39 325 C2 zeigt ein Verfahren zum visuellen Überprüfen und Regulieren der Stellung der Scheinwerfer von Fahrzeugen durch den Fahrer des Fahrzeugs. Hierbei werden ein halbdurchlässiger Spiegel und ein ebener Schirm in definierten Positionen senkrecht zu einer Ebene, auf der das Fahrzeug steht, angeordnet.

Die nachveröffentlichte EP 2 050 618 A2 zeigt ein Verfahren zur automatischen Justage einer Lichteinheit eines Fahrzeugs mit einer Lichteinheit, die eine optische Justage-Markierung im sichtbaren Spektralbereich für das menschliche Auge unsichtbar erzeugt, welche mittels einer Detektoreinheit bzw. Kamera erfassbar ist. Durch Vergleich der erfassten Markierung mit einer Referenz-Markierung wird die Lichteinheit justiert.

Es ist die Aufgabe der hier vorliegenden Erfindung ein Verfahren zur automatischen Erkennung einer Dejustage von Scheinwerfern anzugeben.

Dazu wird ein Verfahren angegeben, bei dem mit einem Kamerasystem, die im oder am Fahrzeug angeordnet und auf einen Bereich vor dem Fahrzeug ausgerichtet ist. Das Kamerasystem wird zudem für die Ausführung eines Fahrerassistenzsystems benutzt. Das Kamerasystem erfasst die aktuelle Strahlcharakteristik in Abhängigkeit von der Position eines Fahrzeugscheinwerfers. Die Position des Scheinwerfers wird z.B. durch den Nick- und Gierwinkel angegeben. Zudem ist eine Sollcharakteristik für den Scheinwerferstrahl für zumindest eine Scheinwerferposition bekannt. Bei einer Abweichung von Soll- und Ist-Strahlcharakteristik bei einer vorgegebenen Scheinwerferposition wird eine Dejustage des Scheinwerfers erkannt.
Die Ist-Strahlcharakteristik wird insbesondere während des Fahrzeugbetriebs bei freier Straße bestimmt. Werden keine Objekte auf der Fahrbahn vor dem Fahrzeug detektiert, dann wird bei einer vorgegebenen Scheinwerfereinstellung, z.B. Ruhelage=Null Grad (d. h. Gierwinkel=Null Grad und Nickwinkel=0 Grad), die im Kamerabild sichtbare Lichtintensität bestimmt. In einer vorteilhaften Ausgestaltung der Erfindung wird ein Bereich mit einer Intensität oberhalb eines vorgegebenen Schwellwerts bestimmt, da z.B. nicht der gesamte Beleuchtungsbereich des Scheinwerfers von dem Kamerasystem aufgenommen wird. Zur Erhöhung der Messgenauigkeit ist es vorteilhaft mehrere Messungen zusammenzufassen und ggf. zu mitteln.

In einer vorteilhaften Ausgestaltung der Erfindung wird die Lage des Ist-Lichtverteilungsmuster bezüglich einer zur Fahrzeuglängsachse parallelen Fläche, insbesondere der Fahrspur des Fahrzeugs, bewertet. Dieses Vorgehen bietet den Vorteil, dass die Justage eines Scheinwerfers während des Fahrzeugbetriebs überprüft werden kann. Insbesondere wird das Verfahren bei freier Fahrbahn angewendet, wenn keine Objekte auf der Fahrbahn detektiert werden. Bei einer vorgegebenen Scheinwerferposition wird das Lichtverteilungsmuster auf der Fahrbahn detektiert und mit einem Soll-Lichtverteilungsmuster verglichen, dass die Abbildung des Lichtverteilungsmusters auf eine Fläche parallel zur Fahrbahn berücksichtigt.

Erfindungsgemäß wird die Ist-Lichtverteilung durch Beobachtung der örtlichen Helligkeit anhand von retroreflektierenden Objekten ermittelt. Retroreflektierende Objekte werden häufig zur Kennzeichnung der Fahrbahnbegrenzung eingesetzt. Es sind in der Bildverarbeitung Verfahren bekannt, mit denen der Ort eines Objekts anhand von Bilddaten einer Mono- bzw. Stereokamera abgeschätzt wird. Die Helligkeit von retroreflektierenden Objekten im Bild ist proportional zu der Ist-Lichteinstrahlung am Ort des Objekts. Es wird bei dieser Methode auch der zeitliche Helligkeitsverlauf eines Objekts in einer Bilderfolge betrachtet. Mit der bekannten Eigengeschwindigkeit des Fahrzeugs und einer Ortsschätzung für die retroreflektierenden Objekte wird so das Ist-Lichtverteilungsmuster vermessen. Diese Methode ist insbesondere geeignet, wenn das Lichtverteilungsmuster nicht auf einer Fläche parallel zur Fahrbahn ermittelt werden kann.

In einer weiteren Ausgestaltung der Erfindung wird das Lichtverteilungsmuster bezüglich der Fahrspur des Fahrzeugs bewertet. Bei einer geradlinig verlaufenden Fahrspur, ist das Lichtverteilungsmuster eines Scheinwerfers symmetrisch zum Verlauf der Fahrspur. In dieser Ausgestaltung muss also die genaue Blickrichtung des Kamerasystems nicht bekannt sein, wenn der Verlauf der Fahrspur im Kamerabild bekannt ist. Die Erkennung einer Fahrspur aus Bilddaten ist Stand der Technik und wird bereits in Spurhaltesystemen umgesetzt.

In einer weiteren Ausgestaltung der Erfindung strahlt der Scheinwerfer für die Dejustageerkennung ein besonderes Lichtverteilungsmuster aus. Insbesondere wird das Lichtmuster derart vorgegeben, dass ein zentraler Teilbereich des Scheinwerfers verdunkelt bzw. nur in einem zentralen Teilbereich Licht abgestrahlt wird. Dieser zentrale Teilbereich ist z.B. kreisrund oder rechteckig.

In einer besonderen Ausgestaltung der Erfindung wird für einen Vergleich ein Soll-Lichtverteilungsmuster in Abhängigkeit von der Form des Ist-Lichtverteilungsmusters gewählt.

In einer bevorzugten Ausgestaltung der Erfindung wird bei Erkennung einer Dejustage ein Warnsignal ausgegeben, um den Fahrer auf die Dejustage hinzuweisen. Das Warnsignal kann optisch, akustisch und/oder haptisch ausgegeben werden.

In einer weiteren Ausgestaltung der Erfindung wird bei Erkennung einer Dejustage eine Scheinwerferkalibrierung für zumindest zwei vorgegebene Scheinwerferpositionen durchgeführt, so dass die Ist-Lichtverteilung mit der Soll-Lichtverteilung übereinstimmt.

In einer weiteren Ausgestaltung der Erfindung wird bei Erkennung einer Dejustage und einer Kalibrieranforderung durch den Fahrer eine Scheinwerferkalibrierung für zumindest zwei vorgegebene Scheinwerferpositionen automatisch durchgeführt. Die Kalibrieranforderung durch den Fahrer kann beispielsweise durch eine Eingabevorrichtung im Inneren des Fahrzeugs erfolgen.

Fällen unterschiedlich und muss deshalb mit unterschiedlichen Soll-Lichtverteilungsmustern verglichen werden. In Figur 1a ist ein typisches Lichtverteilungsmuster bei Aufnahme der Fahrbahn und in Figur 1b bei Aufnahme einer Wand senkrecht zur Fahrzeuglängsachse dargestellt.
In einer bevorzugten Ausgestaltung der Erfindung wird bei Erkennung einer Dejustage ein Warnsignal ausgegeben, um den Fahrer auf die Dejustage hinzuweisen. Das Warnsignal kann optisch, akustisch und/oder haptisch ausgegeben werden.
In einer weiteren Ausgestaltung der Erfindung wird bei Erkennung einer Dejustage eine Scheinwerferkalibrierung für zumindest zwei vorgegebene Scheinwerferpositionen durchgeführt, so dass die Ist-Lichtverteilung mit der Soll-Lichtverteilung übereinstimmt.
In einer weiteren Ausgestaltung der Erfindung wird bei Erkennung einer Dejustage und einer Kalibrieranforderung durch den Fahrer eine Scheinwerferkalibrierung für zumindest zwei vorgegebene Scheinwerferpositionen automatisch durchgeführt. Die Kalibrieranforderung durch den Fahrer kann beispielsweise durch eine Eingabevorrichtung im Inneren des Fahrzeugs erfolgen.

## Patentansprüche

1. Verfahren zur Dejustageerkennung eines Scheinwerfers eines Fahrzeugs mit einem Kamerasystem, das die Umgebung vor dem Fahrzeug erfasst, wobei
• sich der Scheinwerfer in einer vorgegebenen Position befindet und das Kamerasystem am oder im Fahrzeug angeordnet und derart ausgerichtet ist, dass das Lichtverteilungsmuster des Scheinwerfers vor dem Kraftfahrzeug erfasst wird,
• bei einer vorgegebenen Scheinwerferposition ein Ist-Lichtverteilungsmuster des Scheinwerfers mit dem Kamerasystem aufgenommen und mit einem Soll-Lichtverteilungsmuster für die vorgegebene Scheinwerferposition verglichen wird,
• und bei Abweichung der Ist-Lichtverteilungsmusters von dem Soll-Lichtverteilungsmuster eine Dejustage des Scheinwerfers erkannt wird,
**dadurch gekennzeichnet, dass**
das Ist-Lichtverteilungsmuster anhand einer Helligkeit von retroreflektierenden Objekten in zumindest einem Bild bestimmt wird, wobei der Ort des retroreflektierenden Objekts anhand von Bilddaten des Kamerasystems abgeschätzt wird, wobei der zeitliche Helligkeitsverlauf des retroreflektierenden Objekts in einer Bilderfolge betrachtet und zusammen mit einer bekannten Eigengeschwindigkeit des Fahrzeugs bei der Bestimmung des Ist-Lichtverteilungsmusters berücksichtigt werden,
wobei das Kamerasystem zudem für die Ausführung eines Fahrerassistenzsystems benutzt wird.

2. Verfahren nach Anspruch 1, wobei das Ist-Lichtverteilungsmuster anhand der Lage eines Beleuchtungsbereichs mit einer Intensität oberhalb eines vorgegebenen Schwellwerts im Bild erkannt wird.

3. Verfahren nach Anspruch 1 oder 2, wobei die Lage des Ist-Lichtverteilungsmuster bezüglich einer zur Fahrzeuglängsachse parallelen Fläche, insbesondere der Fahrspur des Fahrzeugs, bewertet wird.

4. Verfahren nach einem der vorherigen Ansprüche, wobei der Scheinwerfer für die Dejustageerkennung ein besonderes Lichtverteilungsmuster ausstrahlt.

5. Verfahren nach Anspruch 1 oder 4, wobei für einen Vergleich ein Soll-Lichtverteilungsmuster in Abhängigkeit von der Form des Ist-Lichtverteilungsmusters gewählt wird.

6. Verfahren nach einem der vorherigen Ansprüche, wobei bei Erkennung einer Dejustage ein Warnsignal ausgegeben wird.

7. Verfahren nach einem der Ansprüche 1-5, wobei bei Erkennung einer Dejustage eine Scheinwerferkalibrierung für zumindest zwei vorgegebene Scheinwerferpositionen durchgeführt wird.

8. Verfahren nach einem der Ansprüche 1-6, wobei nach Erkennung einer Dejustage und einer Kalibrieranforderung durch den Fahrer eine Scheinwerferkalibrierung für zumindest zwei vorgegebene Scheinwerferpositionen durchgeführt wird.

9. Fahrzeug mit einer Vorrichtung zur Dejustageerkennung eines Scheinwerfers, umfassend
- einen ansteuerbaren Scheinwerfer mit Steuergerät
- ein Kamerasystem, das am oder im Fahrzeug angeordnet und derart ausgerichtet ist, dass ein Lichtverteilungsmuster des Scheinwerfers vor dem Kraftfahrzeug erfasst wird, und
- eine Auswerteeinheit, die mit dem Steuergerät des Scheinwerfers und dem Kamerasystem verbunden und auf der ein Verfahren nach einem der vorherigen Ansprüche hinterlegt ist.

## Claims

1. A method for detecting misalignment of a headlight of a vehicle with a camera system which captures the surroundings in front of the vehicle, wherein
• the headlight is in a predetermined position and the camera system is arranged on or in the vehicle and aligned such that the light distribution pattern of the headlight in front of the motor vehicle is captured,
• an actual light distribution pattern of the headlight in a predetermined headlight position is recorded by the camera system and is compared with a target light distribution pattern for the predetermined headlight position,
• and a misalignment of the headlight is detected when the actual light distribution pattern deviates from the target light distribution pattern,
**characterized in that**
the actual light distribution pattern is determined based on a brightness of retroreflecting objects in at least one image, wherein the location of the retroreflecting object is estimated based on image data of the camera system, wherein the temporal brightness curve of the retroreflecting object is observed in an image sequence and taken into account together with a known own velocity of the vehicle in the determination of the actual light distribution pattern, wherein the camera system is further used for the execution of a driver assistance system.

2. The method according Claim 1, wherein the actual light distribution pattern is detected in the image based on the position of an illumination area with an intensity above a predetermined threshold value.

3. The method according to Claim 1 or 2, wherein the position of the actual light distribution pattern is evaluated with reference to a surface which is parallel to the longitudinal axis of the vehicle, in particular the driving lane of the vehicle.

4. The method according to any one of the preceding claims, wherein the headlight emits a particular light distribution pattern for the detection of misalignment.

5. The method according to Claim 1 or 4, wherein a target light distribution pattern is selected for a comparison depending on the shape of the actual light distribution pattern.

6. The method according to any one of the preceding claims, wherein a warning signal is emitted when a misalignment is detected.

7. The method according to any one of Claims 1 to 5, wherein a headlight calibration is carried out for at least two predetermined headlight positions when a misalignment is detected.

8. The method according to any one of Claims 1 to 6, wherein a headlight calibration is carried out for at least two predetermined headlight positions after detection of a misalignment and a calibration request by the driver.

9. A vehicle having a device for detecting misalignment of a headlight, comprising
- a controllable headlight with control apparatus
- a camera system which is arranged on or in the vehicle and aligned such that a light distribution pattern of the headlight in front of the motor vehicle is detected, and
- an evaluating unit which is connected to the control apparatus of the headlight and to the camera system and on which a method according to any one of the preceding claims is stored.

## Revendications

1. Procédé pour l'identification de mésalignement d'un phare d'un véhicule avec un système de caméra, lequel détecte les environs du véhicule,
• le phare se trouvant dans une position spécifiée et le système de caméra étant disposé sur ou dans le véhicule et étant orienté de telle sorte que le schéma de répartition lumineuse du phare devant le véhicule automobile est détecté,
• pour une position de phare spécifiée, un schéma de répartition lumineuse réel du phare est enregistré par le système de caméra et est comparé à un schéma de répartition lumineux prescrit pour la position de phare spécifiée,
• et un mésalignement du phare étant identifié, lors d'un écart entre le schéma de répartition lumineuse réel et le schéma de répartition lumineuse prescrit,
**caractérisé en ce que**
le schéma de répartition lumineuse réel est déterminé à l'aide d'une luminosité d'objets rétroréfléchissants dans au moins une image, l'emplacement de l'objet rétroréfléchissant étant estimé à l'aide de données d'images du système de caméra, la courbe de luminosité dans le temps de l'objet rétroréfléchissant étant observée dans une séquence d'images et prise en compte conjointement avec une vitesse propre connue du véhicule lors de la détermination du schéma de répartition lumineuse réel,
le système de caméra étant en outre utilisé pour l'exécution d'un système d'aide à la conduite.

2. Procédé selon la revendication 1, le schéma de répartition lumineuse réel étant identifié dans l'image à l'aide de la position d'une zone d'éclairage avec une intensité au-dessus d'une valeur seuil spécifiée.

3. Procédé selon la revendication 1 ou 2, la position du schéma de répartition lumineuse réel étant évaluée par rapport à une surface parallèle à l'axe longitudinal du véhicule, en particulier par rapport à la voie de circulation du véhicule.

4. Procédé selon l'une quelconque des revendications précédentes, le phare émettant un schéma de répartition lumineuse donné pour l'identification de mésalignement.

5. Procédé selon la revendication 1 ou 4, un schéma de répartition lumineuse prescrite étant sélectionné en fonction de la forme du schéma de répartition lumineuse réel, pour une comparaison.

6. Procédé selon l'une quelconque des revendications précédentes, un signal d'avertissement étant émis lors de l'identification d'un mésalignement.

7. Procédé selon l'une des revendications 1-5, un calibrage de phare étant exécuté pour au moins deux positions de phare spécifiées lors de l'identification d'un mésalignement.

8. Procédé selon l'une des revendications 1-6, un calibrage de phare étant exécuté pour au moins deux positions de phare spécifiées lors de l'identification d'un mésalignement et d'une demande de calibrage par le conducteur.

9. Véhicule avec un dispositif pour l'identification de mésalignement d'un phare, comprenant
- un phare commandable avec un appareil de commande
- un système de caméra, lequel est disposé sur ou dans le véhicule et est orienté de telle sorte qu'un schéma de répartition lumineuse du phare est détecté devant le véhicule automobile, et
- une unité d'évaluation, laquelle est reliée à l'appareil de commande du phare et au système de caméra et dans laquelle un procédé selon l'une quelconque des revendications précédentes est enregistré.
